# EUROPÄISCHE PATENTSCHRIFT

(11) **EP 1 013 404 B1**
(45) Veröffentlichungstag und Bekanntmachung des Hinweises auf die Patenterteilung: **13.11.2002**
(21) Anmeldenummer: 99122108.6
(22) Anmeldetag: 05.11.1999
(51) Int. Cl.: B29C 53/08, B29C 53/82, B29C 33/52

(54) **Verfahren zur Herstellung eines gekrümmten Schlauches**
Method for producing a bent hose
Procédé de fabrication d'un tuyau flexible coudé

(30) Priorität: 22.12.1998 DE 19859375; 19.03.1999 DE 19912304
(43) Veröffentlichungstag der Anmeldung: 28.06.2000
(73) Patentinhaber: Mündener Gummiwerk GmbH, 34346 Hann. Münden (DE)
(72) Erfinder: Möller, Thilo, 34346 Hann. Münden (DE); Sukau, Wolfgang, 34346 Hann. Münden (DE)
(74) Vertreter: WALTHER, WALTHER & HINZ Patentanwälte

(56) Entgegenhaltungen:
- EP-A- 0 755 773
- DE-A- 2 341 974
- DE-A- 2 419 256
- DE-A- 4 017 273
- DE-A- 4 402 984
- US-A- 3 992 505
- US-A- 4 019 939

## Beschreibung

Die Erfindung betrifft ein Verfahren zur Herstellung eines gekrümmten Schlauches, insbesondere eines Schlauches mit einem Elastomerwerkstoff, wobei ein Schlauchrohling unter Formgebung vulkanisiert wird.

Derartige gekrümmte Schläuche werden häufig in der Kraftfahrzeugindustrie z. B. als Krümmerschläuche oder auch als Kraftstoffschläuche eingesetzt. Zur Herstellung eines derartigen gekrümmten Schlauches ist bekannt, zunächst einen Schlauchrohling herzustellen, wobei ein solcher Schlauchrohling aus einem Elastomer besteht, der mit einer Druckträgerschicht, beispielsweise einem Gestrick oder auch einem Gewebe versehen ist. Derartige Schläuche werden vor der Vulkanisation auf einen entsprechend geformten Dorn geschoben, wobei in einem Kessel unter entsprechenden Bedingungen der Schlauch auf dem Dorn vulkanisiert wird. Nach der Vulkanisation wird der Schlauch vom Dorn gezogen.

Insbesondere das Aufbringen des Schlauches auf den Dorn bzw. das Runterziehen des Schlauches vom Dorn ist mit nicht unerheblichem Kraftaufwand verbunden und ist, da diese Vorgänge immer manuell vorgenommen werden, ein erheblicher Kostenfaktor bei der Herstellung derartiger Schläuche. Des Weiteren ist die Herstellung derartiger Dorne auch relativ aufwendig und damit teuer.

Aus der DE-A 1 44 02 984 ist ein Verfahren zur Herstellung von Rohrleitungen mit räumlich gekrümmter Geometrie bekannt. Hierbei wird ein Kern aus niedrigschmelzendem Material in eine gewünschte Form überführt, auf diese Form wird eine Hülle aus einem thermoplastischen Material aufgebracht. Hierauf wird ein schlauchähnlicher Gewebestrumpf aufgezogen, der mit einem Harz getränkt ist. Nach Aushärten des Harzes wird der Kern ausgeschmolzen, so dass ein Rohr einer bestimmten Form entsteht.

Die DE-A 1 2 419 256 lehrt ein Verfahren zur Herstellung eines Schlauches, wobei ein Schlauchrohling, z. B. aus Kautschuk, unter Formgebung vulkanisiert wird. Hierbei wird der an einem Ende verschlossene Rohling mit einem fließfähigen Medium gefüllt und anschließend in eine Form bestimmter Kontur eingelegt. In der Form wird der Rohling vulkanisiert. Nachteilig hierbei ist, dass beim Biegen des Rohlings mit der Flüssigkeit sich im Bereich der Krümmungen Verwerfungen bilden können, die die Haltbarkeit des Schlauches negativ beeinflussen.

Aus der EP-A2 755 773 ist ein Verfahren bekannt, bei dem ein Schlauchrohling auf einem Kunststoffdorn extrudiert wird. Der Schlauchrohling mit dem Dorn wird dann in eine entsprechend konturierte Negativform eingelegt und dort vulkanisiert. Der Dorn aus Kunststoff soll wieder verwendbar sein. Beim Extrudiervorgang besteht hierbei die Gefahr, dass die Innenschicht des Schlauchs ebenfalls Verwerfungen bildet, die sich auf die Haltbarkeit des Schlauchs negativ auswirken, insbesondere wenn man bedenkt, dass durch solche Verwerfungen die Diffusionsdichtigkeit des Schlauchs beeinträchtigt werden kann.

Der Erfindung liegt daher die Aufgabe zugrunde, ein Verfahren zur Herstellung eines gekrümmten Schlauchs gemäß der eingangs genannten Art bereitzustellen, dessen Durchführung einfacher und auch preiswerter ist, als dies nach dem Stand der Technik möglich ist, ohne dass die Innenwandung des Schlauchs beschädigt oder derart beeinträchtigt wird, dass die Diffusionsgefahr erhöht ist.

Die Aufgabe wird erfindungsgemäß dadurch gelöst, dass der Schlauchrohling mit einer gefrierfähigen Flüssigkeit, z. B. Wasser, gefüllt wird, die Flüssigkeit durch Gefrieren verfestigt wird, der Schlauchrohling mit der gefrorenen Flüssigkeit in eine entsprechende Form gebracht wird, und der Rohling anschließend in der Form vulkanisiert wird. Durch Unterkühlung des Schlauches aufgrund der im Schlauchinneren befindlichen kristallinen Flüssigkeit, ist eine plastische Verformung des Schlauches möglich. Hierbei ist sicherzustellen, dass z. B. bei Verwendung von Wasser das Eis im duktilen Bereich gehalten wird, das heißt, dass kein Sprödbruch erfolgt, wenn der Schlauch verformt wird. Dies ist der Fall, wenn Wasser eine Temperatur von etwa 0°C bis -4°C aufweist. Wesentlich ist, dass das Eis oder jedes andere gefrorene Gut keine groben Kristalle bildet, die den Schlauch innenseitig beschädigen können.

Nach einem besonders vorteilhaften Merkmal ist vorgesehen, dass der Schlauch mit der gefrorenen Flüssigkeit zur Formgebung in eine Form eingelegt wird, die nach Art einer Halbschale ausgebildet ist. Zusammen mit dieser Form kann der Schlauchrohling dann in dem Kessel vulkanisiert werden. Durch die Form kann somit die Kontur des Schlauches definiert festgelegt werden.

Weiterhin kann nach einem Merkmal vorgesehen sein, dass der Schlauchrohling vor dem Befüllen mit der gefrierfähigen Flüssigkeit an zumindest einem Ende verschlossen wird. Vor dem Vorgang der Vulkanisation ist es jedoch erforderlich, dass der Schlauch endseitig wieder geöffnet wird, um ein Herauslaufen der tauenden Flüssigkeit zu ermöglichen. Vorteilhaft ist die Durchführung des erfindungsgemäßen Verfahrens insbesondere dann, wenn der zu vulkanisierende Schlauch an der Innenwandung eine hautartige Sperrschicht, beispielsweise aus Fluorkunststoff aufweist, die eine Stärke von 0,1 bis 0,2 mm aufweist. Eine derartige Sperrschicht dient bei Kraftstoffschläuchen dazu, die Permeation des Kraftstoffs durch den Elastomerwerkstoff zu verhindern. Es hat sich gezeigt, dass bei der Formgebung derartiger Schläuche auf Dornen diese hauchdünne Sperrschicht leicht beschädigt wird, was erhebliche Kosten verursacht, da die Schläuche bei den entsprechenden Fahrzeugen gegebenenfalls ausgetauscht werden müssen. Bei einem nach dem erfindungsgemäßen Verfahren hergestellten Schlauch besteht die Gefahr der Beschädigung der Sperrschicht naturgemäß nicht. Insbesondere besteht bei der Verformung keine Gefahr der Bildung von Falten der hautartigen Sperrschicht, weil mit dem Gefrieren eine Volumenvergrößerung einhergeht, die die Innenwandung des Schlauches unter Spannung hält, also quasi dehnt, so dass beim Biegen des Schlauchrohlings der Faltenbildung durch diese Dehnung entgegengewirkt wird.

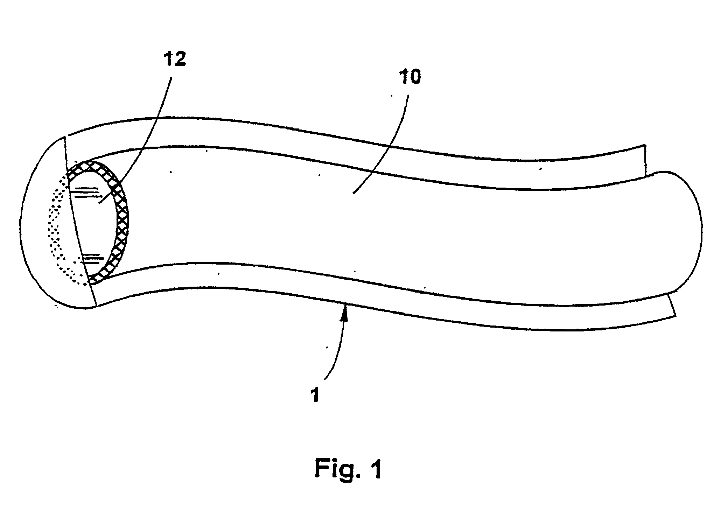

Anhand der Zeichnung wird die Erfindung nachstehend beispielhaft näher erläutert. Aus der Zeichnung ist eine Form 1 nach Art einer Halbschale erkennbar, in die der Schlauchrohling 10 eingelegt wird. Der Schlauchrohling 10 ist mit einer gefrorenen Flüssigkeit 12, z. B. Wasser, gefüllt und endseitig offen, um bei der Vulkanisation ein Herauslaufen der Flüssigkeit aus dem Schlauchinneren zu ermöglichen.

## Patentansprüche

1. Verfahren zur Herstellung eines gekrümmten Schlauches, insbesondere eines Schlauches mit einem Elastomerwerkstoff, z. B. Kautschuk, wobei ein Schlauchrohling (10) unter Formgebung vulkanisiert wird,
**dadurch gekennzeichnet,**
**dass** der Schlauchrohling (10) mit einer gefrierfähigen Flüssigkeit (12) gefüllt wird, die Flüssigkeit durch Gefrieren verfestigt wird, der Schlauchrohling (10) mit der gefrorenen Flüssigkeit (12) in eine entsprechende Form (1) gebracht wird und der Rohling anschließend in der Form (1) vulkanisiert wird.

2. Verfahren nach Anspruch 1,
**dadurch gekennzeichnet,**
**dass** der Schlauchrohling (10) vor Befüllen mit der gefrierfähigen Flüssigkeit (12) an zumindest einem Ende verschlossen wird.

3. Verfahren nach Anspruch 1,
**dadurch gekennzeichnet,**
**dass** der Schlauchrohling (10) während der Vulkanisation endseitig geöffnet ist, um ein Herauslaufen der tauenden Flüssigkeit (12) zu ermöglichen.

4. Verfahren nach Anspruch 1,
**dadurch gekennzeichnet,**
**dass** der Schlauch (10) an der Innenwandung eine hautförmige Sperrschicht aufweist.

5. Verfahren nach Anspruch 4,
**dadurch gekennzeichnet,**
**dass** die Sperrschicht aus einem Fluorkunststoff besteht.

6. Verfahren nach Anspruch 4,
**dadurch gekennzeichnet,**
**dass** die Sperrschicht 0,1 bis 0,2 mm stark ist.

7. Verfahren nach Anspruch 1,
**dadurch gekennzeichnet,**
**dass** der Schlauchrohling (10) mit der gefrorenen Flüssigkeit (12) in eine halbschalenförmige Form (1) eingelegt wird.

## Claims

1. A method of manufacturing a bent hose, more specifically a hose with an elastomeric material, e.g. rubber, a hose blank (10) being cured while being formed,
**characterized in that**
the hose blank (10) is filled with a freezable fluid (12), the fluid is solidified by freezing, the hose blank (10) with the frozen fluid (12) is placed inside an appropriate mould (1) and the blank is next cured inside said mould (1).

2. The method according to claim 1,
**characterized in that**
the hose blank (10) is closed at one end at least prior to being filled with the freezable fluid (12).

3. The method according to claim 1,
**characterized in that**,
in order to permit escape of the thawing fluid (12), the end of the hose blank (10) is open during the process of curing.

4. The method according to claim 1,
**characterized in that**
the hose (10) is provided, on its interior surface, with a skin-like barrier layer.

5. The method according to claim 4,
**characterized in that**
the barrier layer is made of fluoroplastic.

6. The method according to claim 4,
**characterized in that**
the barrier layer is from 0.1 to 0.2 mm thick.

7. The method according to claim 1,
**characterized in that**
the hose blank (10) with the frozen fluid (12) is placed inside a shell-shaped mould (1).

## Revendications

1. Procédé de fabrication d'un tuyau courbé, plus particulièrement d'un tuyau à l'élastomère, en caoutchouc par exemple, une préforme d'un tuyau (10) étant vulcanisée pendant la mise en forme
**caractérisé en ce que**
la préforme de tuyau (10) est remplie d'un liquide congelable (12), que le liquide est solidifié par congélation, que la préforme de tuyau (10) contenant le liquide congelé (12) est placée dans un moule (1) adéquat et que la préforme est ensuite vulcanisée dans le moule (1).

2. Procédé selon la revendication 1,
**caractérisé en ce que**
la préforme de tuyau (10) est fermée à au moins une extrémité avant d'être remplie du liquide congelable (12).

3. Procédé selon la revendication 1,
**caractérisé en ce que**
la préforme de tuyau (10) est ouverte à son extrémité pendant la vulcanisation afin de permettre à la glace fondante (12) de s'écouler.

4. Procédé selon la revendication 1,
**caractérisé en ce que**
le tuyau (10) est pourvu, sur sa paroi interne, d'une couche de barrage ayant l'aspect d'une peau.

5. Procédé selon la revendication 4,
**caractérisé en ce que**
la couche de barrage est en plastique fluoré.

6. Procédé selon la revendication 4,
**caractérisé en ce que**
la couche de barrage a une épaisseur de 0,1 à 0,2 mm.

7. Procédé selon la revendication 1,
**caractérisé en ce que**
la préforme de tuyau (10) contenant le liquide congelé (12) est placé dans un moule (1) ayant la forme d'une demi-coque.
